(19) Europäisches Patentamt

European Patent Office

Office européen des brevets

(11) **EP 4 318 315 A1**

(12) **EUROPEAN PATENT APPLICATION**

(43) Date of publication:
**07.02.2024 Bulletin 2024/06**

(21) Application number: **22188412.5**

(22) Date of filing: **02.08.2022**

(51) International Patent Classification (IPC):
**G06N 3/0464** $^{(2023.01)}$

(52) Cooperative Patent Classification (CPC):
**G06N 3/0495; G06N 3/0464**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Imec VZW**
  **3001 Leuven (BE)**
• **Katholieke Universiteit Leuven**
  **KU Leuven Research & Development**
  **3000 Leuven (BE)**

(72) Inventors:
• **Laubeuf, Nathan**
  **3010 Kessel-Lo (BE)**
• **Bhattacharjee, Debjyoti**
  **3000 Leuven (BE)**
• **Vrancx, Peter**
  **2220 Hallaar (BE)**

(74) Representative: **AWA Sweden AB**
  **Box 5117**
  **200 71 Malmö (SE)**

(54) **A COMPUTER IMPLEMENTED METHOD FOR TRANSFORMING A PRE-TRAINED NEURAL NETWORK AND A DEVICE THEREFOR**

(57) The present invention relates to a computer implemented method (30) for transforming a pre-trained neural network. The method (300) comprising: receiving (S302), by a transformation device, the pre-trained neural network, wherein the pre-trained neural network comprises a number of neurons, and wherein each neuron is associated with a respective weight vector; generating (S304), by the transformation device, a ternary representation of each weight vector, by transforming each weight vector into a ternary decomposition, comprising a ternary matrix, and a power-of-two vector, wherein elements of the power-of-two vector are different powers of two; and outputting (S306), by the transformation device, a transformed neural network, wherein the weight vectors of each neuron is represented by the ternary representation; whereby an output of each neuron, obtainable by a multiplication between an input vector of each neuron and the respective weight vector, can be determined by additions, subtractions and bit shift operations.

Fig. 1

EP 4 318 315 A1

**Description**

Technical field

The present invention relates to a method and a device for transforming a pre-trained neural network. The present inventive concept further relates to a method and a device for running a transformed neural network.

Background of the invention

Driven by the growing interest in artificial intelligence and machine learning, the development of neural networks has seen great advancements the last years. As the neural networks evolve, the size and complexity of the networks has typically increased with it. The state-of-the-art neural networks of today can have millions, billions, or even hundreds of billions of parameters.

The increasing sizes of neural networks comes with the downside that they require increasing amounts of computational power. Deep learning models (e.g. neural networks) typically need to run on specialized hardware, such as GPUs or other types of dedicated accelerator hardware. However, effectively running these models on devices with limited processing speed, limited memory availability, or limited power budget, on the other hand remains a challenge today.

There are two general options when it comes to compression of neural networks in terms of computational or memory requirements; reducing the number of operations or reducing the complexity of these operations. The former is commonly referred to as network pruning, which aims at removing specific weights and their respective connections in the network to reduce its size and complexity. The latter one is commonly referred to as quantization, where the precision of the parameters (e.g. weights of the network) is reduced, e.g. by reducing the number of significant digits. However, both of these techniques have the drawback that they typically require a complex post-processing phase after a neural network has been trained and before the neural network can be deployed, which may require retraining of the network, as well as reducing the performance (i.e. the accuracy or precision) of the network. Hence, there is need for improvements within the art.

Summary of the invention

It is an object to, at least partly, mitigate, alleviate, or eliminate one or more of the above-identified deficiencies in the art and disadvantages singly or in any combination and solve at least the above-mentioned problems.

This and other objects are at least partly met by the invention as defined in the independent claims. Preferred embodiments are set out in the dependent claims.

The inventors of the present inventive concept have realized a way of obtaining a more computational and memory efficient neural network by performing a transformation of already trained neural networks. The transformation enables the networks to be deployed on hardware without the need for (computationally) costly large-scale Multiply-Accumulate operations (MACs). Further, it requires no complex post-processing or retraining of the network. At the same time, the transformed neural network have little to none reduction in performance compared to the original network.

According to a first aspect, a method for transforming a pre-trained neural network is provided. The method of the first aspect comprises: receiving, by a transformation device, the pre-trained neural network, wherein the pre-trained neural network comprises a number of neurons, and wherein each neuron is associated with a respective weight vector; generating, by the transformation device, a ternary representation of each weight vector, by transforming each weight vector into a ternary decomposition, comprising a ternary matrix, and a power-of-two vector, wherein elements of the power-of-two vector are different powers of two; and outputting, by the transformation device, a transformed neural network, wherein the weight vectors of each neuron is represented by the ternary representation; whereby an output of each neuron, obtainable by a multiplication between an input vector of each neuron and the respective weight vector, can be determined by additions, subtractions and bit shift operations.

Hence, by the proposed method, the already trained neural network can be transformed into an equivalent network (e.g. in the sense that the performance of the transformed network is comparable to the performance of the original network) which removes the need for multiplications to be performed. Instead, the output of each neuron can be determined by additions, subtractions and bit shift operations which are more computational efficient operations. Further, being able to apply the transformation on already trained networks may allow for a simple process of obtaining a network which is easier to run, since the training process of the network neither has to be adapted, nor has to be repeated.

The neural network may be any type of neural network having fixed weights post training. Examples include, but are not limited to, networks for natural language processing (NLP), Convolutional Neural Networks (CNN), Long short-term memory (LSTM), Recurrent Neural Networks (RNN), Multi-Layer Perceptron (MLP) networks, and Transformer Networks. The wording "neuron", is herein meant to refer to a single unit in a typical neural network, which together with additional units make up the neural network. In each neuron, an operation of determining an output from an input is performed. This operation can be formulated determining a weighted sum of inputs and an application of a non-linear activation function to the weighted sum of inputs. Also, a bias term may be added before applying the activation function. This operation may be expressed as a dot product between an input (vector) of the neuron and a weight vector of the neuron, followed by the application of the non-linear activation function. The types of neural networks which can be transformed according to the proposed method all have an equivalent to the "neuron" as described herein, even though the operations may not look exactly the same. For example in the case of MLP networks, the network has the neuron as its core building block, as the network is formed by layers of interconnected neurons, where each neuron is associated with a weight vector. In CNNs, as another example, the neuron may be used to refer to the application of convolutional filters which are applied to the input of a convolutional layer. The application of the filter and the input may be represented in vector form by a dot product between a filter vector (in other words a weight vector) and an input vector (followed by the activation function), which generates one entry in the multi-dimensional output (i.e. feature map) of a convolutional layer. Thus, the neurons in CNNs may be seen as the application of the filter to a subregion of the input to the CNN. Hence, the neurons may not be interconnected as such, but rather interrelated, e.g. in the sense that the different neurons (i.e. filters of a convolutional layer) share parameters with each other.

By the wording "pre-trained" as in "pre-trained neural network", it is hereby meant that the neural network has been trained prior to being transformed. Thus, the method can be applied to any existing pre-trained neural network. Thus, the method can be performed on the large amount of pre-trained neural networks which are available to the public, instead of having to train the neural networks themselves.

By the wording "weight vector", it is hereby meant a vector of trainable parameters of a neuron. It should be noted that the trainable parameters may be arranged in a matrix to form a weight matrix as well. However, in such case the weight matrix may be unrolled into vector form so as to represent the parameters as a weight vector.

By the wording "transformed" as in "transformed neural network", it is hereby meant that the neural network is represented in a different way. In particular, the weight vectors of the neurons of the neural network are represented by their ternary representation.

By the wording "ternary representation" as in "ternary representation of each weight vector", it is hereby meant that the weight vectors are represented by its ternary decomposition. In other words, the weight vectors may be represented by the ternary matrix multiplied with the power-of-two vector. The ternary decomposition refers to the process of decomposing a number as a sum of different powers of two, wherein each power of two is associated with a ternary factor, which can take one of a number of three different values.

By the wording that an output of each neuron can be "determined by additions, subtractions and bit shift operations", it is hereby meant that the output can be determined solely by additions, subtractions and bit shift operations and no other types of operations are needed. In particular, MACs are not needed for determining the output of each neuron. Further, it should be realized that one or more types of operation among additions, subtractions and bit shift operations can be performed for determining the output of each neuron, but determination of the output of each neuron does not necessarily involve all types of operation among additions, subtraction and bit shift operations.

It should be noted that the wording "original" is used throughout the disclosure to refer to a structure prior to the transformation. For example, the "original neural network" refers to the neural network before being transformed into the "transformed neural network". The same goes for e.g. the "original weight vector" which refers to the weight vector before being transformed into its ternary representation.

Each element of the ternary matrix may have a value of 1, 0 or -1. In other words, the ternary factors may be selected form the group consisting of 1, 0 and -1. This is commonly referred to in the art as a balanced ternary decomposition. Using the balanced ternary decomposition may be advantageous in that it may represent both positive and negative values in a simple and efficient way.

The method may further comprise pruning the neural network by removing a set of columns of the ternary matrix and the corresponding elements of the power-of-two vector of at least one neuron.

By pruning the neural network, the memory requirement of the neural network as well as the number of operations required can be reduced. Further, the ternary representation of the transformed network can be leveraged when identifying connections in the network that contributes the least to the performance of the network. Thus, when pruning at the ternary level, subnetworks (i.e. the connections) that are responsible for most of the performance of the network can be easily identified and kept, while the others (which contribute little to none to the performance) can be removed.

The set of columns and elements to be removed may be selected by: determining a contribution score of each element in the power-of-two vector; and selecting the elements of the power-of-two vector which has a contribution score below a contribution threshold, and the corresponding columns of the ternary matrix.

By the wording "contribution score" it is hereby meant a measure of how important the element (i.e. the power-of-two) is for the performance of the neural network. Hence, elements which lie below the contribution threshold can be removed with little to none effect on the performance of the neural network.

Pruning the neural network based on the contribution score may be advantageous in that it may capture the elements of the power-of-two vector which contributes the least to the performance of the neural network regardless of their values. For example, both relatively large exponents and relatively small exponents may be found to contribute more or less to the neural network.

The set of columns and elements to be removed may be selected by selecting the elements of the power-of-two vector which has an exponent value below an exponent threshold, and the corresponding columns of the ternary matrix.

In other words, the power-of-twos which has an exponent lower than the exponent threshold may be removed. The low exponent valued powers-of-two may contribute the least to the performance of the neural network. By investigating the distribution of power-of-two exponents of the ternary representations of the weight vectors, the inventors have found that many weight vectors are associated with low exponent values powers-of-two. Thus, removing these elements may reduce the memory requirement of the neural network while having little effect on the performance of the neural network.

In many cases, the lowest valued exponents of the power-of-two vector may contribute the least to the performance of the neural network. Thus, pruning the neural network based on the exponent threshold may be advantageous in that it requires no additional computations other than comparing the elements of the power-of-two to the exponent threshold. Thus, it provides a simple and efficient way of pruning the neural network.

According to a second aspect, a method for running a neural network having been transformed according to the first aspect is provided. The method according to the second aspect comprises: receiving, by an inference device, input data; inputting, by the inference device, the input data into the neural network; and processing, by the inference device, the input data by the neural network to determine output data of the neural network; wherein said processing comprises propagating the input data through a number of neurons of the neural network, wherein an output of a neuron of the number of neurons is obtained by a multiplication between an input vector and a weight vector represented by the ternary representation, and wherein said multiplication is determined by additions, subtractions and bit shift operations.

The input data may be any type of input data which the neural network is to determine an output from. For example, the input may be image data, text data or numerical data. The output data may be any type of data outputted from the neural network. For example, the output data may be a classification, prediction or manipulation of the input data.

Running the transformed neural network may allow for a less computational and memory heavy process since additions, subtractions and bit shift operations can be used instead of multiplications.

As known to the person skilled in the art, the wording "inference" is commonly used for the process of "deploying" or "running" a trained machine learning model, such as a neural network, to produce an output. Herein, the wording "inference" is used as a label of the device used to run the neural network, to separate it from a transformation device as described below.

The above-mentioned features of the first aspect, when applicable, apply to this second aspect as well. In order to avoid undue repetition, reference is made to the above.

According to a third aspect, a transformation device for transforming a pre-trained neural network is provided. The transformation device comprises circuitry configured to execute: a receiving function configured to receive the pre-trained neural network, wherein the pre-trained neural network comprises a number of neurons, and wherein each neuron is associated with a respective weight vector; a generating function configured to generate a ternary representation of each weight vector, by transforming each weight vector into a ternary decomposition, comprising a ternary matrix, and a power-of-two vector, wherein elements of the power-of-two vector are different powers of two; and an outputting function configured to output a transformed neural network, wherein the weight vectors of each neuron is represented by the ternary representation; whereby an output of each neuron, obtainable by multiplication between an input vector of each neuron and the respective weight vector, can be determined by additions, subtractions and bit shift operations.

The circuitry may be further configured to execute a pruning function configured to prune the neural network by removing a set columns of the ternary matrix and the corresponding elements of the power-of-two vectors of at least one neuron.

The pruning function may be configured to select the set of columns and elements to be removed by: determining a contribution score of each element in the power-of-two vector; and selecting the elements of the power-of-two vector which has a contribution score below a contribution threshold, and the corresponding columns of the ternary matrix.

The pruning function may be configured to select the set of columns and elements to be removed by: selecting the elements of the power-of-two vector which has an exponent value below an exponent threshold, and the corresponding columns of the ternary matrix.

The above-mentioned features of the first and second aspects, when applicable, apply to this third aspect as well. In order to avoid undue repetition, reference is made to the above.

According to a fourth aspect, an inference device for running a neural network having been transformed according to the method of the first aspect is provided. The inference device comprises circuitry configured to execute: a receiving function configured to receive input data; and an inference function configured to: input the input data into the neural network; and process the input data by the neural network to determine output data of the neural network; wherein said processing comprises propagating the input data through a number of neurons of the neural network, wherein an output of a neuron of the number of neurons is obtained by a multiplication between an input vector and a weight vector represented by the ternary representation, and wherein said multiplication is determined by additions, subtractions and bit shift operations.

The above-mentioned features of the first, second and third aspects, when applicable, apply to this fourth aspect as well. In order to avoid undue repetition, reference is made to the above.

According to a fifth aspect a non-transitory computer-readable storage medium is provided. The non-transitory computer-readable storage medium comprising program code portions which, when executed on a device having processing capabilities, performs the method according to the first aspect or the method according to the second aspect.

The above-mentioned features of the first aspect, the second aspect, the third aspect, and the fourth aspect, when applicable, apply to this fifth aspect as well. In order to avoid undue repetition, reference is made to the above.

A further scope of applicability of the present disclosure will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

Hence, it is to be understood that this inventive concept is not limited to the particular steps of the methods described or component parts of the systems described as such method and system may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several units, and the like. Furthermore, the words "comprising", "including", "containing" and similar wordings do not exclude other elements or steps.

Brief description of the drawings

The above and other aspects of the present inventive concept will now be described in more detail, with reference to appended drawings showing variants of the present inventive concept. The figures should not be considered limiting the invention to the specific variant; instead, they are used for explaining and understanding the inventive concept.

As illustrated in the figures, the sizes of layers and regions are exaggerated for illustrative purposes and, thus, are provided to illustrate the general structures of variants of the present inventive concept. Like reference numerals refer to like elements throughout.

Figure 1 is a schematic representation of a transformation device for transforming a pre-trained neural network.
Figure 2 is a schematic representation of an inference device for running a transformed neural network.
Figure 3 is a flow chart illustrating the step of a method for transforming a pre-trained neural network.
Figure 4 is a flow chart illustrating the step of a method for running a transformed neural network.
Figure 5 is a schematic illustration of how an output of a neuron of a transformed neural network can be determined.
Figure 6A to 6E illustrates, by way of example, how the present inventive concept can be applied to a convolutional neural network.
Fig. 7A to 7E schematically illustrates, by way of example, how the present inventive concept can be implemented on hardware structures.
Fig. 8 are graphs illustrating the distribution of exponents in transformed neural networks.

Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

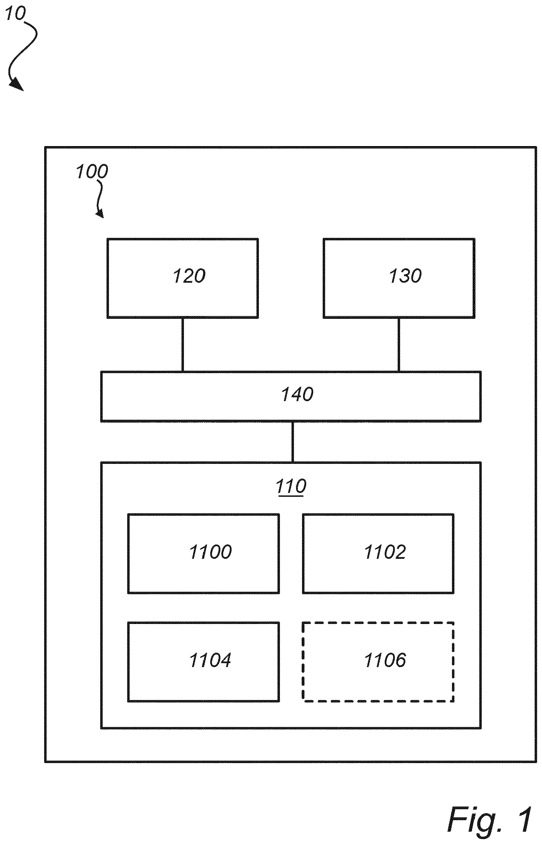

A transformation device 10 and a method 30 for transforming a pre-trained neural network, as well as an inference device 20 and method 40 for running such a transformed neural network will now be described with reference to Fig. 1 to Fig. 8.

The present inventive concept builds upon a transformation of pre-trained neural networks realized by the inventors. Neural networks comprise a number of neurons. More specifically, the neural network may comprise a plurality of layers of neurons, and each neuron may represent a mathematical operation which is applied to its input data. Typically, a neural network comprises an input layer, one or more hidden layers, and an output layer. The first layer may be referred to as the input layer. The output of each layer (except the output layer) in the neural network may be fed to a subsequent layer, which in turn produces a new output. The new output may be fed to a further subsequent layer. The output of the neural network may be an output of the output layer. The process may be repeated for all layers in the neural network. Typically, each layer further comprises an activation function. The activation function may further define the output of a neuron of the layer. For example, the activation function may ensure that the output from a layer (or each neuron of the layer) is not too large or too small (e.g., tending towards positive or negative infinity). Further, the activation function may introduce non-linearity into the neural network. During a training process of the neural network, weights and/or biases associated with the neurons of the layers may be adjusted until the neural network produces predictions for the input data that fulfills a criterion. After the training, the weights and/or biases are typically kept as fixed optimal values.

In general, each neuron may be configured to multiply an input (i.e. an input vector $x$) of the neuron with a number of weights (i.e. a weight vector $w$) associated with that neuron. Each neuron may be further configured to add a bias $b$ associated with that neuron to the input. Finally, the activation function $\sigma$ may be applied. Put differently, an output from a neuron may be a weighted sum of inputs in addition to the bias. The weights and biases may be adjusted in a recursive process and/or an iterative process. This may be known as backpropagation within the art. The output $o$ of a neuron can be formulated as,

$$o = \sigma\left(\sum_{i=1}^{n} w_i x_i + b\right).$$

Mathematically, the output of a single neuron can be expressed as a dot product between the input vector $x$ and the weight vector $w$ multiplied by the activation function $\sigma$, i.e.,

$$o = \sigma(w^T x + b).$$

Since the elements of the weight vector and input vector can be represented by datatypes which rely on base-two representations (e.g. integers, fixed point, floating point, half precision floating point, block floating point), the inventors proposes a transformation of the trained neural network into a ternary representation. More specifically, any binary number $y$ can be expressed as a dot product between a ternary vector $t_y \in \{-1,0,1\}^N$ and a vector of powers-of-two $\xi$ (where an arbitrary element $i$ is given by $\xi_i = 2^{ei}$, $e_i \in \mathbb{Z}^N$, i.e.,

$$y = t_y \xi.$$

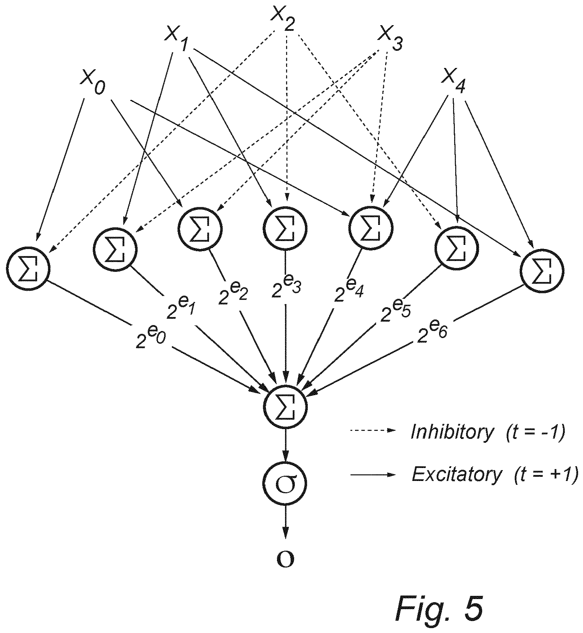

Using this reformulation on the weight vector $w$, the output of the neuron can be rewritten as (for simplicity, the bias $b$ has been integrated into the input vector $x$),

$$o = \sigma(x^T T_w \xi),$$

where $T_w \in \{-1,0,1\}^{K \times N}$, $\xi = 2^e$, $e \in \mathbb{Z}^N$. Herein, $K$ and $N$ denotes the dimensions of the ternary matrix $T_w$, where $K$ is the same as the length of the input vector $x$, and $N$ is the same as the number of power-of-two exponents used (i.e. the length of the power-of-two vector $\xi$). Each row of the ternary matrix $T_w$ (multiplied with the power-of-two vector $\xi$) corresponds to one element of the original weight vector $w$. Since the elements of the ternary matrix $T_w$ is either -1, 0 or 1, the vector-matrix multiplication $x^T T_w$ boils down to simple additions and subtractions. Applying the power-of-two vector $\xi$ can be performed by simple bit shift operations, since the elements of the power-of-two vector is simply different powers of two. It should be noted that bit shift operations are, to computing devices, a computationally efficient operation, which is well known in the art. A schematic illustration of how the operations can be made is presented in Fig. 5, as a non-limiting example. In this example,

$$x = \begin{bmatrix} x_0 \\ x_1 \\ x_2 \\ x_3 \\ x_4 \end{bmatrix}, \quad T_w = \begin{bmatrix} 1 & 0 & 1 & 0 & 1 & 0 & 0 \\ 0 & 1 & 0 & 1 & 0 & 0 & 1 \\ -1 & 0 & 0 & -1 & 0 & -1 & 0 \\ 0 & -1 & -1 & 0 & -1 & 0 & 0 \\ 0 & 0 & 0 & 0 & 1 & 1 & 1 \end{bmatrix}, \quad \text{and} \quad \xi = \begin{bmatrix} 2^{e_0} \\ 2^{e_1} \\ 2^{e_2} \\ 2^{e_3} \\ 2^{e_4} \\ 2^{e_5} \\ 2^{e_6} \end{bmatrix}.$$

As seen in Fig. 5, the output of the neuron $o$ can be determined by first adding the elements of the input vector $x$ either inhibitory or excitatory, depending on the elements of the ternary matrix $T_w$, then applying the elements of the power-of-two vector $\xi$ before applying the activation function $\sigma$ to obtain the final result.

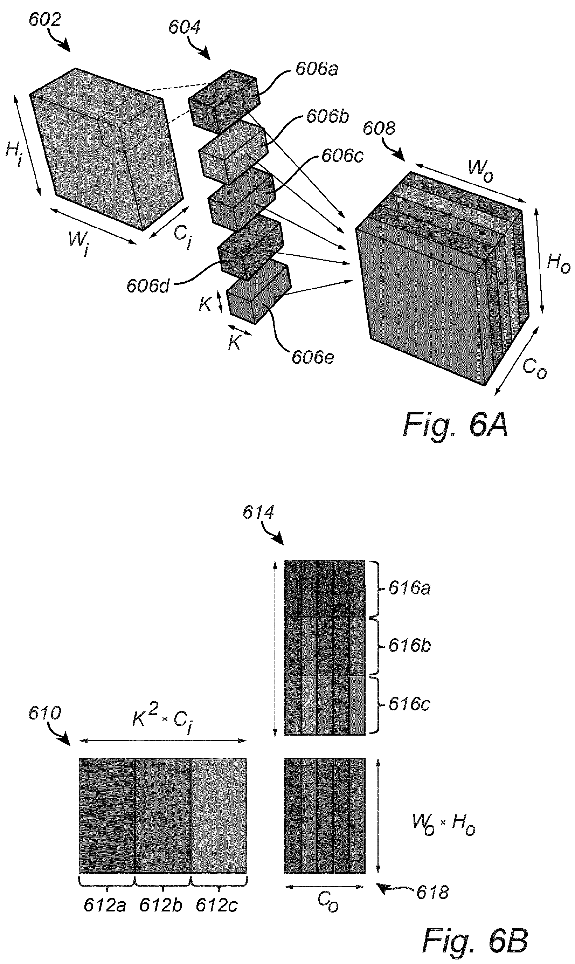

Convolutional neural networks (CNNs) are one type of neural network which can be transformed according to the proposed method 30 (further described below). However, other types of neural networks may be used as well. In connection with Fig. 6A to 6E below, an illustrative example of how the transformation can be performed on a CNN is discussed.

Figure 1 illustrates, by way of example, a transformation device 10 for transforming a pre-trained neural network. The transformation device 10 is illustrated in a schematic view. Hence, it should be noted that sizes, shapes and positions of the different elements in the figure are not limiting in any way, but rather merely for illustrative purposes.

The transformation device 10 may be a computing device. Examples of suitable computing devices comprise computers, servers, smartphones, tablets, etc. The transformation device 10 may further be implemented as part of a cloud server and/or a distributed computing arrangement. It is further to be understood that the transformation device 10 may comprise further components, for example input devices (mouse, keyboard, touchscreen, etc.) and/or a display. The transformation device 10 may further comprise a power source, for example a connection to electrical power, a battery, etc. The transformation device 10 comprises circuitry 100. As is illustrated in the example of Fig. 1, the circuitry 100 may comprise one or more of a memory 110, a processing unit 120, a transceiver 130, and a data bus 140. The memory 110, the processing unit 120, and the transceiver 130 may communicate via the data bus 140. Accompanying control lines and address busses between the memory 110, the processing unit 120 and the transceiver 130 may also be present.

The processing unit 120 may for example comprise a central processing unit (CPU), a graphical processing unit (GPU), a microcontroller, or a microprocessor. The processing unit 120 may be configured to execute program code stored in the memory 110, in order to carry out functions and operations of the transformation device 10.

The transceiver 130 may be configured to communicate with external devices. The transceiver 130 may both transmit data from and receive data to the transformation device 10. For example, the transceiver 130 may be configured to communicate with servers, computer external peripherals (e.g., external storage), etc. The external devices may be local devices or remote devices (e.g., a cloud server). The transceiver 130 may be configured to communicate with the external devices via an external network (e.g., a local-area network, the internet, etc.). The transceiver 130 may be configured for wireless and/or wired communication. Suitable technologies for wireless communication are known to the skilled person. Some non-limiting examples comprise Wi-Fi, Bluetooth and Near-Field Communication (NFC). Suitable technologies for wired communication are known to the skilled person. Some non-limiting examples comprise USB, Ethernet, and Firewire.

The memory 110 may be a non-transitory computer-readable storage medium. The memory 110 may be a random-access memory. The memory 110 may be a non-volatile memory. The memory 110 may comprise one or more of a buffer, a flash memory, a hard drive, a removable media, a volatile memory, a non-volatile memory, a random access memory (RAM), or another suitable device. In a typical arrangement, the memory may include a non-volatile memory for long term data storage and a volatile memory that functions as system memory for the transformation device 10. The memory 110 may exchange data within the circuitry 100 over the data bus 140.

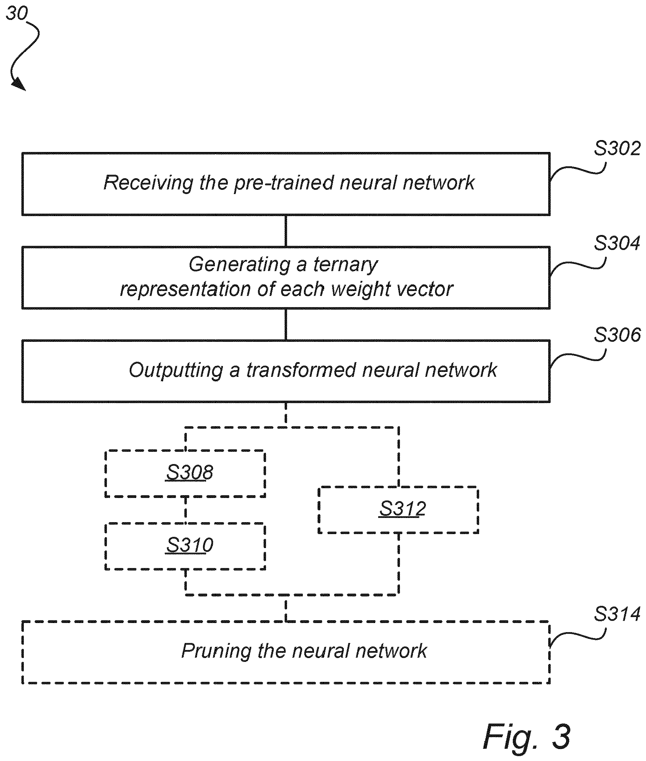

As is illustrated in the example of Fig. 1, the memory 110 may store program code portions 1100, 1102, 1104, 1106 corresponding to one or more functions. The program code portions 1100, 1102, 1104, 1106 may be executable by the processing unit 120, which thereby performs the functions. Hence, when it is referred to that the circuitry 100 is configured to execute a specific function, the processing unit 120 may execute program code portions corresponding to the specific function which may be stored on the memory 110. However, it is to be understood that one or more functions of the circuitry 100 may be hardware implemented and/or implemented in a specific integrated circuit. For example, one or more functions may be implemented using field-programmable gate arrays (FPGAs). Put differently, one or more functions of the circuitry 100 may be implemented in hardware or software, or as a combination of the two. The described functions and operations may be considered a method that the corresponding transformation device 10 is configured to carry out, such as the method 30 discussed below in connection with Fig. 3.

The circuitry 100 is configured to execute a receiving function 1100, a generating function 1102, and an outputting function 1104. The circuitry 100 may be configured to execute additional functions.

The receiving function 1100 is configured to receive the pre-trained neural network. As stated above, the pre-trained neural network comprises a number of neurons. Each neuron is associated with a respective weight vector. Each neuron may further be associated with a respective input vector when the neural network is run. The pre-trained neural network may be received from an external source, such as a remote server or the like. Alternatively, the pre-trained neural network may be stored on the memory 110 of the transformation device 10.

The generating function 1102 is configured to generate a ternary representation of each weight vector. The ternary weight vector representations are generated by transforming each weight vector into a ternary decomposition. The ternary weight vector representation comprises a ternary matrix, and a power-of-two vector. The elements of the power-of-two vector are different powers of two. Thus, the generating function 1102 may perform the ternary decomposition as described above.

The outputting function 1104 is configured to output a transformed neural network. The weight vectors of each neuron of the transformed neural network is represented by the ternary representation. The outputted transformed neural network is thus a trained neural network which can replace the original pre-trained neural network but having a different representation. An output of each neuron, obtainable by multiplication between an input vector of each neuron and the respective weight vector, can be determined by additions, subtractions and bit shift operations due to the ternary representation of the weight vectors.

The circuitry 100 may be further configured to execute a pruning function 1106. The pruning function may be configured to prune the neural network by removing a set columns of the ternary matrix and the corresponding elements of the power-of-two vectors of at least one neuron. The pruning function 1106 may be further configured to select the set of columns and elements to be removed by determining a contribution score of each element in the power-of-two vector. The elements of the power-of-two vector which has a contribution score below a contribution threshold, and the corresponding columns of the ternary matrix may then be selected to be pruned. Alternatively, the pruning function 1106 may be configured to select the set of columns and elements to be removed by selecting the elements of the power-of-two vector which has an exponent value below an exponent threshold, and the corresponding columns of the ternary matrix. How the pruning can be performed is further described below in connection with the method 30 of Fig. 3, and Fig. 6A to 6E. To avoid undue repetition, reference is made to below.

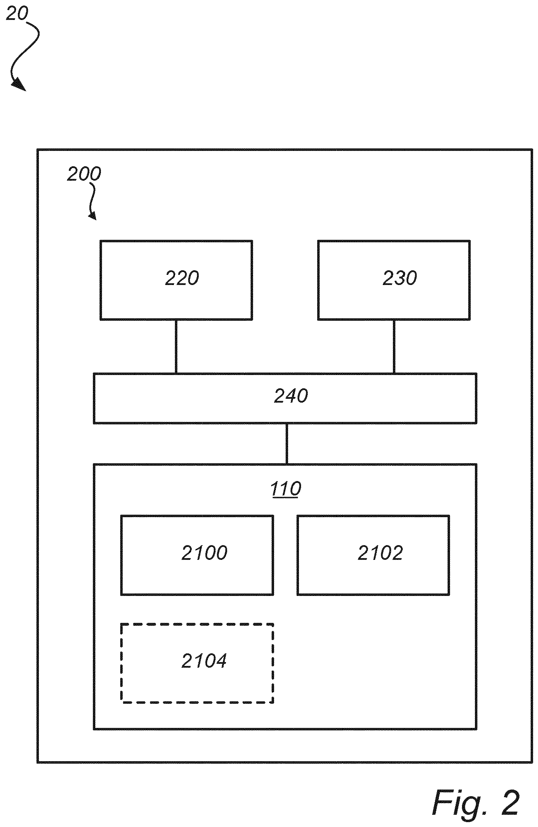

Figure 2 illustrates, by way of example, an inference device 20 for running a neural network having been transformed by the method 30 as described below in connection with Fig. 3. The inference device 20 is illustrated in a schematic view. Hence, it should be noted that sizes, shapes and positions of the different elements in the figure are not limiting in any way, but rather merely for illustrative purposes.

The inference device 20 may be a computing device. Examples of suitable computing devices comprise computers, servers, smartphones, tablets, etc. The inference device 20 may be integrated into the transformation device 10 as described above in connection with Fig. 1, to form a single device. The inference device 20 may further be implemented as part of a cloud server and/or a distributed computing arrangement. It is further to be understood that the inference device 20 may comprise further components, for example input devices (mouse, keyboard, touchscreen, etc.) and/or a display. The inference device 20 may further comprise a power source, for example a connection to electrical power, a battery, etc. The inference device 20 comprises circuitry 200. As is illustrated in the example of Fig. 2, the circuitry 200 may comprise one or more of a memory 210, a processing unit 220, a transceiver 230, and a data bus 240. The memory 210, the processing unit 220, and the transceiver 230 may communicate via the data bus 240. Accompanying control lines and address busses between the memory 210, the processing unit 220 and the transceiver 230 may also be present.

The processing unit 220 may for example comprise a central processing unit (CPU), a graphical processing unit (GPU), a microcontroller, or a microprocessor. The processing unit 220 may be configured to execute program code stored in the memory 210, in order to carry out functions and operations of the inference device 20.

The transceiver 230 may be configured to communicate with external devices. The transceiver 230 may both transmit data from and receive data to the inference device 20. For example, the transceiver 230 may be configured to communicate with servers, computer external peripherals (e.g., external storage), etc. The external devices may be local devices or remote devices (e.g., a cloud server). The transceiver 230 may be configured to communicate with the external devices via an external network (e.g., a local-area network, the internet, etc.). The transceiver 230 may be configured for wireless and/or wired communication. Suitable technologies for wireless communication are known to the skilled person. Some non-limiting examples comprise Wi-Fi, Bluetooth and Near-Field Communication (NFC). Suitable technologies for wired communication are known to the skilled person. Some non-limiting examples comprise USB, Ethernet, and Firewire.

The memory 210 may be a non-transitory computer-readable storage medium. The memory 210 may be a random-access memory. The memory 210 may be a non-volatile memory. The memory 210 may comprise one or more of a buffer, a flash memory, a hard drive, a removable media, a volatile memory, a non-volatile memory, a random access memory (RAM), or another suitable device. In a typical arrangement, the memory may include a non-volatile memory for long term data storage and a volatile memory that functions as system memory for the inference device 20.

The memory 210 may exchange data within the circuitry 200 over the data bus 240.

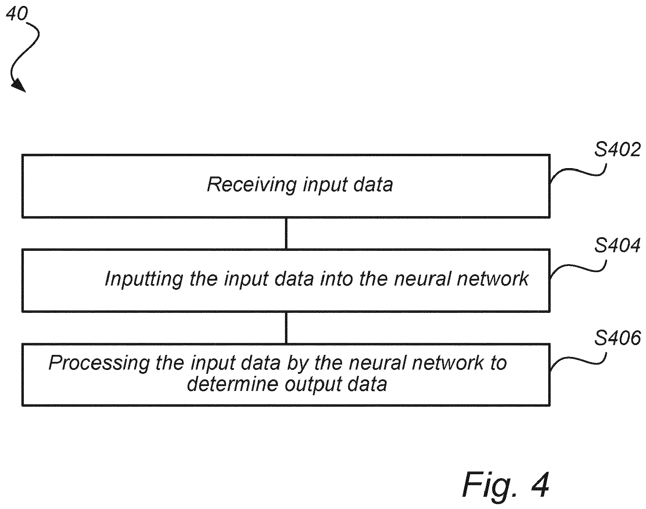

As is illustrated in the example of Fig. 2, the memory 210 may store program code portions 2100, 2102, 2104 corresponding to one or more functions. The program code portions 2100, 2102, 2104 may be executable by the processing unit 220, which thereby performs the functions. Hence, when it is referred to that the circuitry 200 is configured to execute a specific function, the processing unit 220 may execute program code portions corresponding to the specific function which may be stored on the memory 210. However, it is to be understood that one or more functions of the circuitry 200 may be hardware implemented and/or implemented in a specific integrated circuit. For example, one or more functions may be implemented using field-programmable gate arrays (FPGAs). Put differently, one or more functions of the circuitry 200 may be implemented in hardware or software, or as a combination of the two. The described functions and operations may be considered a method that the corresponding inference device 20 is configured to carry out, such as the method 40 discussed below in connection with Fig. 4.

The circuitry 200 is configured to execute a receiving function 2100 and a generating function 2102. The circuitry 200 may be configured to execute additional functions.

The receiving function 2100 is configured to receive input data. The input data may be received from an external source, such as a remote server or the like. Alternatively, the input data may be stored on the memory 210 of the inference device 20.

The inference function 2102 is configured to input the input data into the neural network; and process the input data by the neural network to determine output data of the neural network. The act of processing comprises propagating the input data through a number of neurons of the neural network. An output of a neuron of the number of neurons is obtained by a multiplication between an input vector and a weight vector represented by the ternary representation. Said multiplication can be determined by additions, subtractions and bit shift operations due to the transformation of the neural network. Thus, the transformed neural network can be executed as well known to the skilled person. However, the operation of the transformed neural network can performed by more simple operations.

The circuitry 200 may be further configured to execute a transmitting function 2104 configured to transmit the output data. The output data may be transmitted to a user interface, such as a screen. The output data may be transmitted to an external device or an external server.

Figure 3 is a flow chart illustrating the steps of the method 30 for transforming a pre-trained neural network.

Below, the different steps are described in more detail. Even though illustrated in a specific order, the steps of the method 30 may be performed in any suitable order, in parallel, as well as multiple times.

The pre-trained neural network is received S302. The pre-trained neural network comprises a number of neurons, and wherein each neuron is associated with a respective weight vector.

A ternary representation of each weight vector is generated S304 by transforming each weight vector into a ternary decomposition. The ternary representation comprises a ternary matrix, and a power-of-two vector, wherein elements of the power-of-two vector are different powers of two. The ternary representation of the weight vectors may be generated by the ternary decomposition as described above.

A transformed neural network is outputted S306. The weight vectors of each neuron of the transformed neural network is represented by the ternary representation.

Thereby, an output of each neuron, obtainable by a multiplication between an input vector of each neuron and the respective weight vector, can be determined by additions, subtractions and bit shift operations.

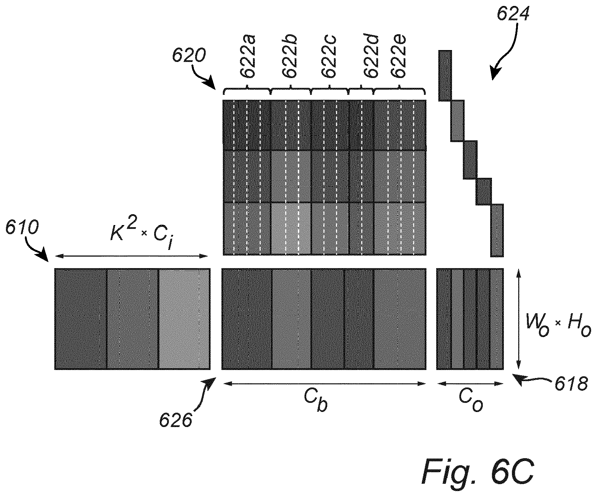

The neural network may be pruned S314 by removing a set of columns of the ternary matrix and the corresponding elements of the power-of-two vectors of at least one neuron. Said set of columns and said corresponding elements may be removed in the sense that their values are set to zero. Thus, during execution, those operations can be omitted. Alternatively, said set of columns and said corresponding elements may be removed in the sense that they are omitted during execution, without being set to zero. For example, knowing which set of columns and corresponding elements that is to be removed, they can simply be skipped during execution. Alternatively, said set of columns and said corresponding elements may be removed entirely and the ternary matrix and the power-of-two vector may be resized. It should be noted that, since the power-of-two vector may be shared with the ternary representation of multiple elements of a weight vector (see e.g. Fig. 6C below), removing elements of the power-of-two vector may comprise simply setting the corresponding column of the ternary matrix to zeros, thus not affecting the power-of-two vector.

When pruning a neuron, one or more of the power-of-two elements (and the corresponding columns of the ternary matrix) representing a weight of the original weight vector may be removed. Thus, the neural network may be pruned in the sense that weights may be rounded off (i.e. in a quantization like manner). Alternatively, or in combination, a neuron may be pruned by removing all power-of-two elements (and the corresponding columns of the ternary matrix) representing a weight of the original weight vector. Thus, the neural network may be pruned in the sense that entire weights may be removed (i.e. in the sense of traditional pruning).

The neural network may be pruned by pruning each neuron of the neural network. The neural network may be pruned by pruning each neuron of one or more layers of neurons. The neural network may be pruned by pruning one or more neurons of one or more layers of neurons.

The set of columns and elements to be removed may be by: determining S308 a contribution score of each element in the power-of-two vector; and selecting S310 the elements of the power-of-two vector which has a contribution score below a contribution threshold, and the corresponding columns of the ternary matrix. It goes without saying that pruning the neural network based on the contribution score may allow any element of the power-of-two vector (and its corresponding column of the ternary matrix) to be removed. Thus, the pruned elements of the power-of-two vector need not to be succeeding elements.

An example of a contribution score may be determined based on a first order Taylor expansion of the loss in a neighborhood of pretrained parameters. A vector comprising the columns of all ternary matrices within an un-pruned transformed neural network may be denoted $W_t$ and a loss of the un-pruned transformed neural may be denoted $\mathcal{L}(W_t)$. Since the un-pruned transformed neural network is already trained, $\mathcal{L}(W_t)$ is assumed to be good. Therefore, a pruned transformed neural network (i.e. a network having ternary parameters slightly different from $W_t$) should have a loss close to $\mathcal{L}(W_t)$. Loss variations in the neighborhood of $W_t$ under small perturbations $\delta W_t$ of the vector $W_t$ can be estimated using a first order Taylor approximation:

$$\mathcal{L}(W_t + \delta W_t) \approx \mathcal{L}(W_t) + \delta W_t \cdot \nabla \mathcal{L}(W_t).$$

A vector whose values are equal to $W_t$ for indices belonging to a bit-filter b and 0 otherwise may be denoted $W_t^*$.

Given the approximation above, the impact of the perturbation $\delta W_t = -W_t^*$ caused by pruning of a bit-filter b (further described below) can be estimated as:

$$\delta \mathcal{L} \approx -W_t^* \cdot \nabla \mathcal{L}(W_t^*).$$

By approximating the gradient of the loss of the pruned bit filters, $\nabla \mathcal{L}(W_t^*)$, using backpropagation on a single batch, the bit filters having the lowest $||W_t^* \cdot \nabla \mathcal{L}(W_t^*)||$ can be concluded as contributing the least to the performance of the neural network, as their removal should result in the least amount of loss variation.

The vectors $Wt$, $\delta W_t$, $\nabla \mathcal{L}(W_t)$, $W_t^*$ are all vectors of same size. The vector $W_t$ comprises all ternary parameters of the un-pruned transformed neural network. $\mathcal{L}(W_t)$ is a scalar and it is the loss of the un-pruned transformed neural network with ternary parameters $Wt$. The vector $W_t^*$ is a masked version of $W_t$ where parameters that do not belong to the specified bit filter b are masked to 0.

Determining S308 the contribution score can be done over the entire neural network. The selection can then be performed on a per layer basis (i.e. groups of neurons sharing the same input vector) or network wide.

Alternatively, the set of columns and elements to be removed may be selected by selecting S312 the elements of the power-of-two vector which has an exponent value below an exponent threshold, and the corresponding columns of the ternary matrix. In other words, the exponent threshold may be set such that all elements of the power-of-two matrix which are below that level can be removed, together with the corresponding columns of the ternary matrix. This may be referred to as removing the least significant bits of the ternary representation.

Figure 4 is a flow chart illustrating the steps of the method 40 for running a neural network having been transformed according to the method 30 as described above in connection with Fig. 3.

Below, the different steps of the method 40 are described in more detail. Even though illustrated in a specific order, the steps of the method 40 may be performed in any suitable order, in parallel, as well as multiple times.

Input data is received S402. The input data may be any type of data which a user may want to run through the neural network. Thus, the input data can be data which the neural network is trained to perform its operations on, such as prediction or classification.

The input data is inputted S404 into the neural network.

The input data is processed S406 by the neural network to determine output data of the neural network. The processing S406 may comprise propagating the input data through a number of neurons of the neural network. An output of a neuron of the number of neurons can be obtained by a multiplication between an input vector and a weight vector represented by the ternary representation. Thus, said multiplication can be determined solely by additions, subtractions and bit shift operations. The output data may then be outputted from the neural network.

Fig. 6A to 6E illustrate, by way of example, how the proposed method for transforming a pre-trained neural network (as described above) can be applied to a Convolutional Neural Network (CNN). The transformation of CNNs may also be referred to as convolutional slicing. It goes without saying that this is just one example of neural networks to which the method can be applied.

A convolutional neural network is a type of neural network comprising one or more convolutional layers that represents convolution operations. In short, the convolution operation comprises convolving an input with a kernel 604 (or filter). Fig. 6A illustrates a standard convolutional operation. In this context, the input 602 may typically comprise digital images. A digital image may be represented as matrix (or as a tensor), and each element in the matrix (or tensor) may represent a corresponding pixel of the digital image. The value of an element may thereby represent a pixel value of the corresponding pixel in the digital image. Hence, the input and output to the machine learning model may be numerical (e.g., a matrix or a tensor) representing digital images. The input data may comprise a plurality of input channels. For example, if the input data is an RGB image, the input may comprise three channels. Thus, the input data may be a multi-dimensional matrix (i.e. a tensor). Herein, the input has an input height of $H_i$ (i.e. $H_i$ rows), an input width of $W_i$ (i.e. $W_i$ columns) and an input depth of $C_i$, representing the number of channels (e.g. 3 in case of an RGB image).

The output 608 of the convolutional operation is obtained by sliding the kernel 604 over the input 602. The kernel 604 has a width and height (i.e. kernel size) of $K$ and a number of channels corresponding to the number of input channels $C_i$ of the input 602. The kernel 604 may comprise a number of filters 606a-e. I.e. each convolutional layer may comprise a number of filters 606a-e. Herein, the number of filters 606a-e is five, but any number of filters is possible. Each filter 606a-e may represent a neuron in accordance with the discussion above.

The output 608 of the neural network may be a matrix (or more specifically a tensor) representing an output digital image (or feature map), having one or more output channels $C_o$. The number of output channels $C_o$ (i.e. an output depth) may depend on the number of input channels $C_i$ and the number of filters 606a-e. The output 608 has an output height $H_o$ (i.e. $H_o$ rows) and an output width $W_o$ (i.e. $W_o$ columns). The output height $H_o$ and the output width $W_o$ may differ from the input height $H_o$ and the input width $W_o$ depending on a stride (i.e. how far, in one direction, the filter moves in each step) and any potential padding of the input 602 as the skilled person realizes.

Referring back to the discussion above, the output of a neuron can be expressed as a dot product between the weight vector and the input vector as,

$$o = \sigma(\boldsymbol{w}^T \boldsymbol{x} + b).$$

Neurons sharing the same input (as in the case of CNNs, where each filter shares the same input) can be grouped to be executed in matrix form as,

$$o = \sigma(\boldsymbol{W}^T \boldsymbol{x} + \boldsymbol{b}),$$

where each column of the weight matrix $W$ corresponds to a single neuron and $b$ is a vector of biases. Similarly, a series of inputs that are used by the same neurons can be unrolled in a matrix $X$ such that an output matrix $\boldsymbol{O}$ can be generated by,

$$\boldsymbol{O} = \sigma(\boldsymbol{W}^T \boldsymbol{X} + \boldsymbol{b}).$$

This mode of execution can be applied to, but not limited to, batched linear layers (single layer perceptron) and convolutional layers by applying e.g. the im2col function known within the art. The latter case is illustrated in Fig. 6B.

In Fig. 6B, the input (of a single convolution operation) has been unrolled into an input matrix 610, also denoted by $X$. Thus, the input matrix 610 may represent the receptive field of the filters. The input matrix 610 comprises a number of sub-matrices 612a-c. Each sub-matrix corresponds to a respective input channel $C_i$ of the input 602. Herein, the number of input channels is three representing e.g. an RGB input image. The width of the input matrix 610 becomes $K^2 \times C_i$ and the height of the input matrix 610 becomes $W_o \times H_o$. Each row of the input matrix 610 may represent an input vector that is shared by the filters (or neurons) in a weight matrix 614 (further described below).

Similarly, the filters 606a-e (or neurons) of the convolutional layer can be represented by a weight matrix 614, also denoted by $W$. Each column of the weight matrix $W$ corresponds to the weights of a respective filter of the plurality of filters 606a-e. Each column in turn comprises a number of sub-columns 616a-c corresponding to a respective input channel $C_i$ of the input 602. Thus, each sub-column of the weight matrix 614 corresponds to a respective sub-matrix of the input matrix 610.

Multiplying the input matrix 610 with the weight matrix 614 gives an output matrix 618 (also denoted by *O*), where each column of the output matrix 618 corresponds to the output from one filter (or neuron). Each element of the output matrix *O* is an output of a filter (or neuron) before the application of the non-linear function $\sigma$.

By utilizing the transformation by ternary decomposition as given above, the expression of the output matrix can be formulated as,

$$O = \sigma(X^T T_W \Xi),$$

which is illustrated in Fig. 6C. As described above, the transformation to ternary representation, which can be made without affecting the performance of the neural network, allows the network to be run using simpler operations (even though the number of operations may increase).

The matrix $T_W$, indicated by reference numeral 620, comprises a number of sub-matrices 622a-e, where each sub-matrix is a ternary matrix of one filter (neuron) of the weight matrix 614 of Fig. 6B. The width of the matrix $T_W$ is herein denoted by $C_b$. The width $C_b$ may depend on the number of filters and the dimensions of the ternary decompositions of each filter. The matrix $\Xi$, indicated by reference numeral 624, comprises the power-of-two vectors of the respective filter arranged along the diagonal.

The output matrix 618 (or *O*) may be determined by first computing the matrix multiplication between the input matrix 610 (or *X*) and the matrix 620 (or $T_W$) to generate an intermediate matrix denoted by 626. Since the elements of the matrix $T_W$ are just 1, 0 and -1, this matrix multiplication only involves additions and subtractions. The output matrix 618 can then be determined by a matrix multiplication between the intermediate matrix 626 and the matrix $\Xi$. Since the elements of the matrix $\Xi$ is only powers of two, this operation can be performed by simple bit-shift operations.

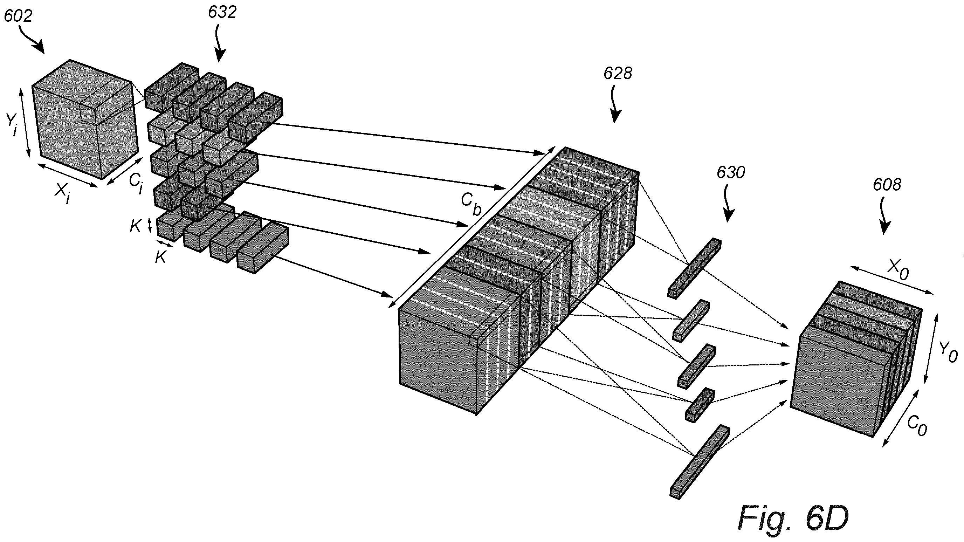

Fig. 6D illustrates the convolutional operation in the same schematic view as in Fig. 6A, but after the transformation of the neural network has been performed. First the convolution operation is performed at the ternary level. Through the transformation of the neural network, the kernel 604 (or more specifically, each filter 606a-e of the convolutional layer) can be subdivided into a set of ternary bit-filters 632. Each bit-filter of the set of bit-filters 632 corresponds to one element of the power-of-two vector of the ternary representation. The convolutional operations results in a partial output 628. Applying the power-of-two vectors 630 to the partial output 628 then results in the output 608.

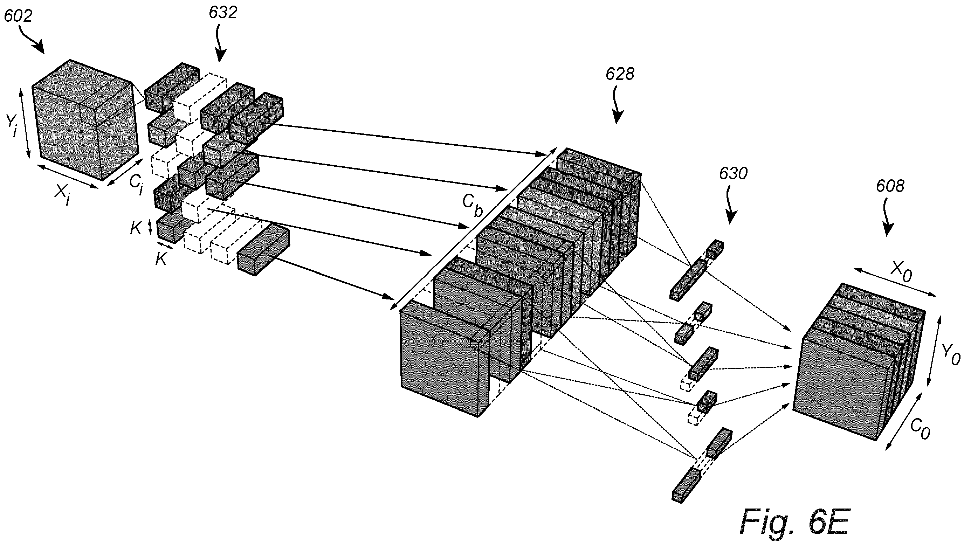

Fig. 6E illustrates illustrates the effect of pruning the neural network at the ternary level. As described above, the neural network may be pruned by removing columns of the ternary matrix and the corresponding elements of the power of two vector of the ternary representations of the weight vectors. Referring to Fig. 6C, this would equate to removing one or more columns of one or more of the sub-matrices 622a-e of the matrix 620 (as well as the corresponding elements of the matrix 624). Looking at Fig. 6E, the removal of columns of the ternary matrices may be illustrated by removing some of the bit-filters 632. The resulting partial output 628 then becomes narrower, in the sense that its width $C_b$, has been reduced. Thus, fewer operations need to be performed. Similarly, elements of the power-of-two vectors 630 are also removed.

Put differently, the pruning of the neural network may be performed by reducing the ternary representation of the elements of the original weight vectors (i.e. removing parts which are of less importance), or removing entire elements of the original weight vectors (i.e. entire ternary representations of weights). The pruning of the neural network may have the effect of reducing the number of operations needed to be performed, since the representation of weight vectors are reduced.

The proposed method was performed on a number of well-known pre-trained neural networks. Table 1 shows the effects of these processes.

*Table 1*

| Network | Size (MB) | Compression rate | Top-1 Accuracy (%) | Accuracy degradation (%) | Estimated compute energy reduction (%) |
|---|---|---|---|---|---|
| VGG19-BN | 18.7 | 4.27 | 73.3 | -0.2 | -70.2 |
| Resnet-18 | 11.4 | 3.93 | 68.1 | -0.2 | -48.7 |
| Resnet-50 | 23.3 | 4.03 | 75.2 | -0.2 | -55.2 |
| Inception-v3 | 22.6 | 3.84 | 76.6 | -0.2 | -47.4 |
| MobileNet-v2 | 2.8 | 3.19 | 70.2 | -0.4 | -26.2 |

The first column shows the name of the network. The second column shows the size of the network post transformation. The third column shows the compression rate in size, compared to its original size. The fourth column shows the Top-1 accuracy of the transformed network (i.e. the accuracy of the highest prediction being correct). The fifth column shows the degradation in accuracy compared to a benchmark of the original network. Lastly, the sixth column shows an estimate of the reduction in compute energy required to run the transformed neural network compared to the original.

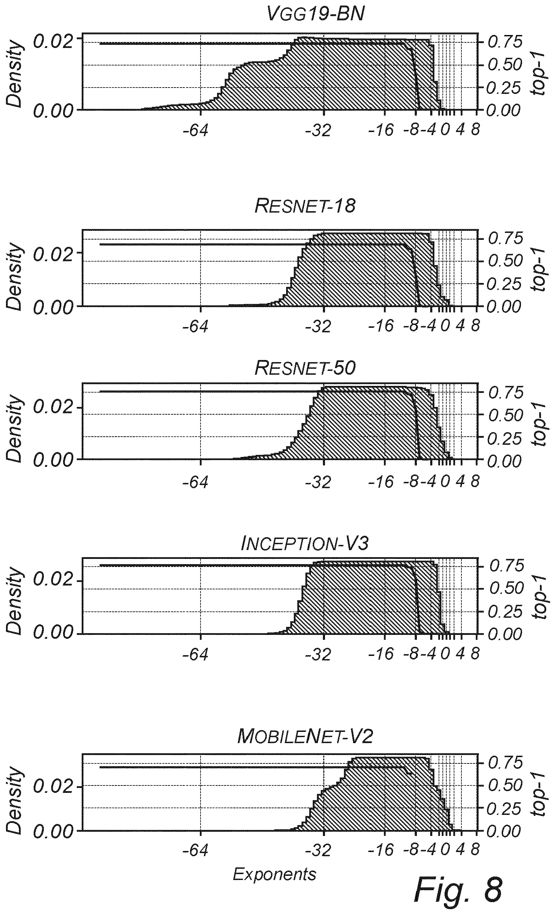

As seen in Table 1, a substantial compression rate (up to 4 times) of the different neural networks can be achieved, while having little effect on the accuracy (as low as 0.2%) and a large effect on the required compute energy (up to 70.2 % in reduction). Further, the effect of pruning the neural network at different exponent thresholds can be seen in Fig. 8 and Table 2 below. Fig. 8 illustrates the distribution of exponents among the ternary representations of weight of the different neural networks in Table 1. It further shows what effect removing exponents below different threshold has on the Top-1 accuracy of the networks. As seen in the graphs of Fig. 8, removing exponents below -14 has little to no effect on the Top-1 accuracy of the neural networks. At the same time, a large amount of lower exponents are present, indicating that there are potential for compression. Table 2 illustrates the effect of pruning the network with an exponent threshold of -14, compared to the unpruned networks.

*Table 2*

| Network | Exponent threshold | Size (MB) | Compression rate | #ADDS / #MAC | Top-1 Accuracy (%) | Top-5 Accuracy (%) |
|---|---|---|---|---|---|---|
| VGG19-BN | $-\infty$ | 117.5 | 0.68 | 12.36 | 73.5 | 91.4 |
| | -14 | 30.2 | 2.66 | 2.93 | 73.5 | 91.5 |
| Resnet-18 | $-\infty$ | 54.4 | 0.82 | 12.38 | 69.2 | 88.8 |
| | -14 | 18.5 | 2.41 | 4.47 | 69.1 | 88.8 |
| Resnet-50 | $-\infty$ | 111.8 | 0.84 | 12.43 | 75.4 | 92.6 |
| | -14 | 37.7 | 2.49 | 4.45 | 75.4 | 92.6 |
| Inception-v3 | $-\infty$ | 102.9 | 0.85 | 12.38 | 76.8 | 93.1 |
| | -14 | 37.1 | 2.35 | 4.81 | 76.8 | 93.2 |
| MobileNet-v2 | $-\infty$ | 9.9 | 0.89 | 12.98 | 70.7 | 89.6 |
| | -14 | 3.9 | 2.29 | 5.55 | 70.7 | 89.6 |

The first column shows the name of the network. The second column shows the exponent threshold, where minus infinity represents removing no exponents. The third column shows the size of the networks post transformation. The fourth column shows the compression rate in size, compared to its original size. The fifth column shows a MAC to ADD operation conversion rate between the original and transformed network. The sixth column shows the Top-1 accuracy of the transformed network (i.e. the accuracy of the highest prediction being correct). Lastly, the seventh column shows the Top-5 accuracy of the transformed network (i.e. the accuracy of any of the top 5 prediction being correct).

As is apparent from Table 2, the removal of exponent terms below -14 can be done with little to none effect on the accuracy of the neural networks. This comes with noticeable improvements in memory reduction/compression rate. For example, a compression rate of the weights of at least two can be achieved. Further, a MAC to ADD operation conversion rate below 5 can be achieved for most networks, meaning that the transformed network is at least as energy efficient than the original network (for floating point networks). It can namely be shown that an addition operation can be at least 5.11 times more energy efficient than a MAC operation.

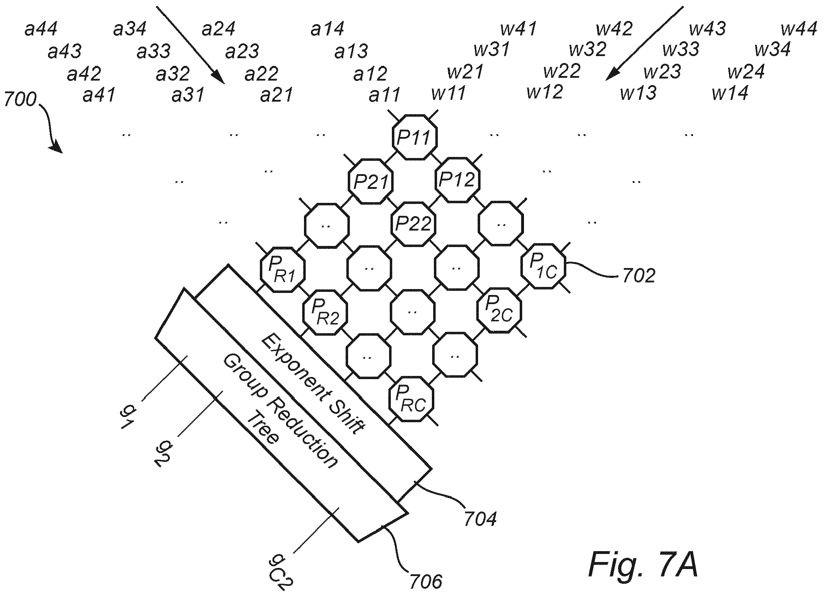

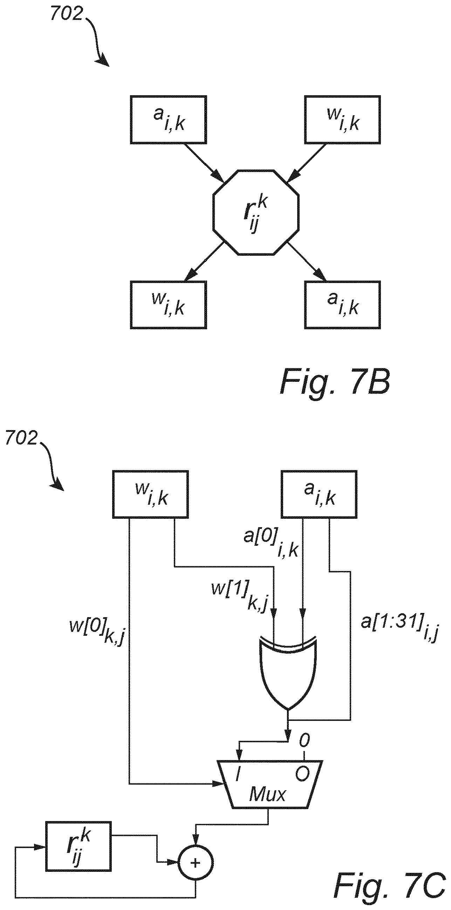

As understood from above, the proposed method for transforming a neural network allows outputs of each neuron (expressed as matrix multiplications) to be determined using simple additions, subtractions and bit-shift operations. Fig. 7A illustrates a systolic architecture 700 as part of the present inventive concept. The systolic architecture 700 can be used to execute the proposed method. More specifically, the systolic architecture 700 may be used to execute the example presented in connection with Fig. 6A to 6E. Thus, the systolic architecture may be part of the transformation device 10 and/or the inference device 20 as described above in connection with Fig. 1 and Fig. 2. It should be noted that the systolic architecture 700 of Fig. 7A and its sub-components of Fig. 7B to 7E are to be seen as non-limiting examples. As the skilled person realizes, the systolic architecture can be implemented in other ways as well.

The systolic array comprises a plurality of interconnected processing elements 702, herein $R \times C$ processing elements, forming an array of processing elements. By propagating elements of two matrices through the plurality of processing elements 702, a matrix multiplication can be performed. The number of processing elements 702 may be the same as the number of elements of the matrices. Thus, the values of $R$ and $C$ may correspond to the number of rows and columns of the matrices propagated through the systolic array. However, as the skilled person realizes, tiled operations may be utilized to such that fewer processing elements may be required.

The output of the plurality of processing elements are then passed on to an exponent shift block 704. Since the weights has been transformed into its ternary representation, the elements in the output of the array of processing elements need to be multiplied by the elements of the power-of-two vector. The exponent shift block 704 multiplies the elements of the power-of-two vector to the output from the processing elements 702. The multiplication of the elements of the power-of-two vector can be performed by bit-shift operations, i.e. left or right shifts of bits, which is a cheaper operation compared to generic multiplication. Thus, the exponent shift block deals with the application of the values in the vector product between the output from the processing elements and the power-of-two vector.

The output of the exponent shift block 704 is then passed on to a group reduction tree 706 which takes care of the addition part of the above mentioned vector product. Thus, the group reduction tree 706 sums together groups of elements belonging to the same filter in the convolutional layer. For example, referring back to Fig. 6C, the columns of each sub-matrix 622a-622e are summed together.

The illustrated example of Fig. 7A illustrates how a matrix $A$ can be multiplied with a matrix $W$ where,

$$A = \begin{bmatrix} a_{11} & a_{12} & a_{13} & a_{14} \\ a_{21} & a_{22} & a_{23} & a_{24} \\ a_{31} & a_{32} & a_{33} & a_{34} \\ a_{41} & a_{42} & a_{43} & a_{44} \end{bmatrix}, \qquad \text{and} \qquad W = \begin{bmatrix} w_{11} & w_{12} & w_{13} & w_{14} \\ w_{21} & w_{22} & w_{23} & w_{24} \\ w_{31} & w_{32} & w_{33} & w_{34} \\ w_{41} & w_{42} & w_{43} & w_{44} \end{bmatrix}.$$

This process may represent the matrix multiplication between an input matrix (herein represented by the matrix $A$) and a matrix of weights (herein represented by the matrix $W$). More specifically, the matrix $W$ may be the ternary matrix of the ternary decomposition.

The matrix multiplication can be performed by propagating the elements of the matrix $A$ and the elements of the matrix $W$ through the processing elements 702 (indicated by the arrows in Fig. 7A) over a number of cycles. As an example, in the first cycle, elements $a11$ and $w11$ are inputted into the processing element $P11$. In the second cycle, element $a11$ is inputted into processing element $P12$ together with element $w12$. Correspondingly, element $w11$ is inputted into processing element $P21$ together with element $a21$. Lastly, elements $a12$ and $w21$ are inputted into processing element $P11$.

A block diagram of a processing element is shown in Fig. 7B. The processing element 702 has an internal register $r_{ij}^k$ which holds a value which is updated each cycle depending on the input. The processing elements takes as input an element $a_{i,k}$ and an element $w_{i,k}$, and passes them through to the neighboring processing elements at the next cycle.

Fig. 7C illustrates a circuit diagram of the processing element of Fig. 7B. Due to the transformation of the neural network (i.e. the ternary decomposition of the weight vectors) the circuit diagram of the processing element can be made more simple than a typical processing element. Typically, a multiplier would be present in the circuit, and thus a number of Multiply-Accumulate (MAC) operations would be performed. However, in the proposed circuit diagram, only an adder with a multiplexer and an Exclusive-OR (XOR) gate is needed. Thus, the proposed MAC free processing element will have lower area and energy footprint compared to traditional processing elements.

In this example, the elements of the matrix $A$ is represented by 32 bit floating point values (fp32). However, other representations may be used as well, such as 16 or 8 bit floating points, or 16 or 8 bit integers. What representation is used may depend on the neural network being transformed. The elements of the matrix $W$ are ternary values and can thus be represented by two bits. Looking at the circuitry diagram of Fig. 7C, when the element $w_{i,k}$ is 0, no operation is performed. Otherwise, depending on the sign of $w_{i,k}$, the sign of the element $a_{i,k}$ is changed and added to the current internal register $r_{ij}^k$.

The values of the internal registers of the array of processing elements constitutes the output from the array of processing elements. The output from the processing elements 702 are then sent through the exponent shift block 704, to apply the power-of-two vector as described above.

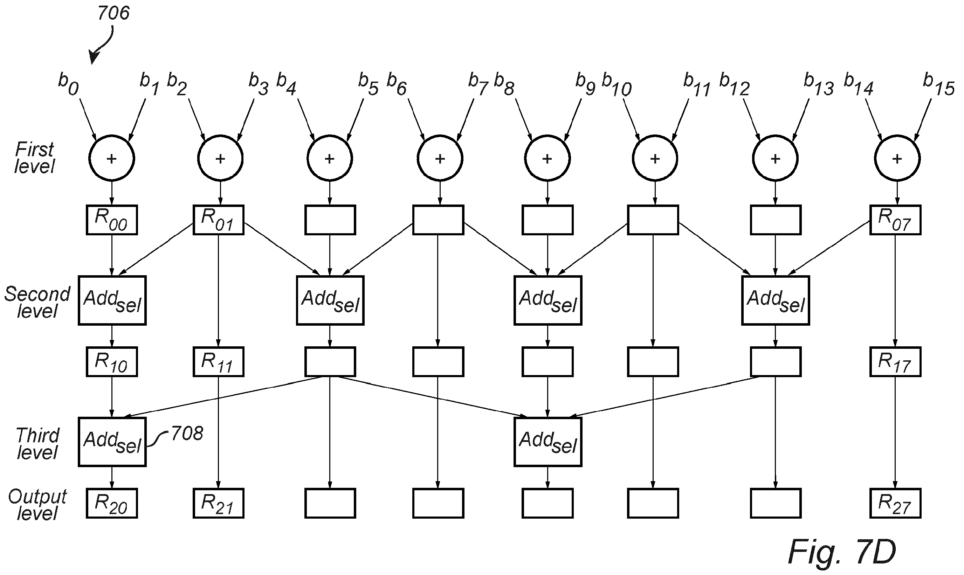

Fig. 7D schematically illustrates the group reduction tree 706.

The group reduction tree 706 receives as input, the output of the exponent shift block 704. In the present example, the group reduction tree 706 takes sixteen elements as input, $b_0$ to $b_{15}$. However, the group reduction tree 706 can be reduced or expanded to any suitable size.

In a first level of the group reduction tree 706, the elements are pairwise summed together. In a second level, the output from the first level is run through a number of Add$_{sel}$ circuits 708 of the second level. In a third level, the output from the second level is run through an additional number of Add$_{sel}$ circuits 708 of the third level. Finally, the output of the group reduction tree 706 is provided at an output layer. As seen in Fig. 7D, some values are propagated trough the group reduction tree 706 without running through the Add$_{sel}$ circuits 708.

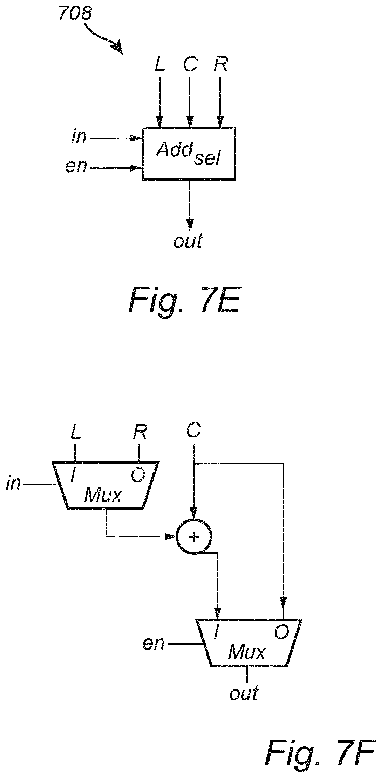

Fig. 7E illustrates a block diagram of the Add$_{sel}$ circuit 708 of the group reduction tree 706 showing the input and outputs of the Add$_{sel}$ circuit 708. The Add$_{sel}$ circuit 708 has three value inputs, left (L), center (C) and right (R). Herein, left, center and right refers to the positions of the output from the previous layer in the group reduction tree 706. The Add$_{sel}$ circuit 708 further has two selector inputs, denoted in and en in Figs 7E and 7F, serving as selectors for a first and second multiplexer of the Add$_{sel}$ circuit 708 (as seen in Fig. 7F). Lastly, the Add$_{sel}$ circuit 708 provides an output (out).

The group reduction tree 706 may be used for reducing multiple groups at the same time depending on the number of inputs to the group reduction tree 706. Thus, with 16 inputs, the group reduction tree 706 may for instance be used for reducing 8 groups of 2 elements or 2 groups of 8 elements.

Fig. 7F is a symbolic representation of the Add$_{sel}$ circuit 708 of the group reduction tree 706. The Add$_{sel}$ circuit 708 comprises a first and second multiplexer, as well as an addition operation.

Additionally, variations to the disclosed variants can be understood and effected by the skilled person in practicing the claimed invention, from a study of the drawings, the disclosure, and the appended claims.

**Claims**

1. A computer implemented method (30) for transforming a pre-trained neural network, the method (30) comprising:

   receiving (S302), by a transformation device, the pre-trained neural network, wherein the pre-trained neural network comprises a number of neurons, and wherein each neuron is associated with a respective weight vector;
   generating (S304), by the transformation device, a ternary representation of each weight vector, by transforming each weight vector into a ternary decomposition, comprising a ternary matrix, and a power-of-two vector, wherein elements of the power-of-two vector are different powers of two; and
   outputting (S306), by the transformation device, a transformed neural network, wherein the weight vectors of each neuron is represented by the ternary representation;
   whereby an output of each neuron, obtainable by a multiplication between an input vector of each neuron and the respective weight vector, can be determined by additions, subtractions and bit shift operations.

2. The method (30) according to claim 1, wherein each element of the ternary matrix has a value of 1, 0 or -1.

3. The method (30) according to claim 1 or 2, further comprising pruning (S314) the neural network by removing a set of columns of the ternary matrix and the corresponding elements of the power-of-two vector of at least one neuron.

4. The method (30) according to claim 3, wherein the set of columns and elements to be removed is selected by:

   determining (S308) a contribution score of each element in the power-of-two vector; and,
   selecting (S310) the elements of the power-of-two vector which has a contribution score below a contribution threshold, and the corresponding columns of the ternary matrix.

5. The method (30) according to claim 3, wherein the set of columns and elements to be removed is selected by:
   selecting (S312) the elements of the power-of-two vector which has an exponent value below an exponent threshold, and the corresponding columns of the ternary matrix.

6. A method (40) for running a neural network having been transformed according to the method (30) of any of the claims 1 to 5, the method (40) comprising:

   receiving (S402), by an inference device, input data;
   inputting (S404), by the inference device, the input data into the neural network; and
   processing (S406), by the inference device, the input data by the neural network to determine output data of the neural network;
   wherein said processing (S406) comprises propagating the input data through a number of neurons of the neural network,
   wherein an output of a neuron of the number of neurons is obtained by a multiplication between an input vector and a weight vector represented by the ternary representation, and
wherein said multiplication is determined by additions, subtractions and bit shift operations.

7. A transformation device (10) for transforming a pre-trained neural network, the device (10) comprising circuitry (100) configured to execute:

   a receiving function (1100) configured to receive the pre-trained neural network, wherein the pre-trained neural network comprises a number of neurons, and wherein each neuron is associated with a respective weight vector;
   a generating function (1102) configured to generate a ternary representation of each weight vector, by transforming each weight vector into a ternary decomposition, comprising a ternary matrix, and a power-of-two vector, wherein elements of the power-of-two vector are different powers of two; and
   an outputting function (1104) configured to output a transformed neural network, wherein the weight vectors of each neuron is represented by the ternary representation;
   whereby an output of each neuron, obtainable by multiplication between an input vector of each neuron and the respective weight vector, can be determined by additions, subtractions and bit shift operations.

8. The transformation device (10) according to claim 7, wherein the circuitry (100) is further configured to execute a pruning function (1106) configured to prune the neural network by removing a set columns of the ternary matrix and the corresponding elements of the power-of-two vectors of at least one neuron.

9. The transformation device (10) according to claim 8, wherein the pruning function (1106) is configured to select the set of columns and elements to be removed by:

   determining a contribution score of each element in the power-of-two vector; and,
   selecting the elements of the power-of-two vector which has a contribution score below a contribution threshold, and the corresponding columns of the ternary matrix.

10. The transformation device (10) according to claim 8, wherein the pruning function (1106) is configured to select the set of columns and elements to be removed by:
    selecting the elements of the power-of-two vector which has an exponent value below an exponent threshold, and the corresponding columns of the ternary matrix.

11. An inference device (20) for running a neural network having been transformed according to the method (30) of any of the claims 1 to 5, the device (20) comprising circuitry (200) configured to execute:

   a receiving function (2100) configured to receive input data; and
   an inference function (2102) configured to:

      input the input data into the neural network; and
      process the input data by the neural network to determine output data of the neural network;

   wherein said processing comprises propagating the input data through a number of neurons of the neural network,
   wherein an output of a neuron of the number of neurons is obtained by a multiplication between an input vector and a weight vector represented by the ternary representation, and
   wherein said multiplication is determined by additions, subtractions and bit shift operations.

12. A non-transitory computer-readable storage medium comprising program code portions which, when executed on a device having processing capabilities, performs the method (30) according to any one of claims 1-5 or the method (40) according to claim 6.

*10*

*100*

| | |
|---|---|
| *120* | *130* |

*140*

<u>*110*</u>

| | |
|---|---|
| *1100* | *1102* |
| *1104* | *1106* |

*Fig. 1*

Fig. 2

30

| Receiving the pre-trained neural network | S302 |

| Generating a ternary representation of each weight vector | S304 |

| Outputting a transformed neural network | S306 |

S308

S310

S312

| Pruning the neural network | S314 |

*Fig. 3*

*40*

| | |
|---|---|
| Receiving input data | *S402* |
| Inputting the input data into the neural network | *S404* |
| Processing the input data by the neural network to determine output data | *S406* |

*Fig. 4*

Fig. 5

Fig. 6A

Fig. 6B

Fig. 6C

Fig. 6D

Fig. 6E

EP 4 318 315 A1

*Fig. 7A*

702

Fig. 7B

702

Fig. 7C

Fig. 7D

Fig. 7E

Fig. 7F

Fig. 8

Europäisches
Patentamt

European
Patent Office

Office européen
des brevets

# EUROPEAN SEARCH REPORT

Application Number

EP 22 18 8412

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAN LIU ET AL: "Pruning Ternary Quantization", ARXIV.ORG, CORNELL UNIVERSITY LIBRARY, 201 OLIN LIBRARY CORNELL UNIVERSITY ITHACA, NY 14853, 23 July 2021 (2021-07-23), XP091015664, * Sections 4.1 and 4.2; page fourth * * Algorithm 1; page fourth * * Section 2.2; page second * | 1-12 | INV. G06N3/0464 |
| A | Li Yuhang ET AL: "Additive Powers-of-Two Quantization: An Efficient Non-uniform Discretization for Neural Networks", , 2 February 2020 (2020-02-02), XP093018215, DOI: 10.48550/arxiv.1909.13144 Retrieved from the Internet: URL:https://arxiv.org/pdf/1909.13144.pdf [retrieved on 2023-01-26] * abstract * * figure 3 * | 1-12 | |
| A | LIANG TAILIN ET AL: "Pruning and quantization for deep neural network acceleration: A survey", NEUROCOMPUTING, ELSEVIER, AMSTERDAM, NL, vol. 461, 21 July 2021 (2021-07-21), pages 370-403, XP086797049, ISSN: 0925-2312, DOI: 10.1016/J.NEUCOM.2021.07.045 [retrieved on 2021-07-21] * Section 4.2.2; page 383, paragraph third * | 1-12 | |

TECHNICAL FIELDS SEARCHED (IPC)

G06N

The present search report has been drawn up for all claims

| Place of search | Date of completion of the search | Examiner |
|---|---|---|
| The Hague | 27 January 2023 | Fonseca dos Santos |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................................
& : member of the same patent family, corresponding document

EPO FORM 1503 03.82 (P04C01)